# EUROPEAN PATENT SPECIFICATION

(11) **EP 4 260 000 B1**
(45) Date of publication and mention of the grant of the patent: **18.11.2026**
(21) Application number: 21824424.2
(22) Date of filing: 02.12.2021
(51) Int. Cl.: F42B 12/46, F42B 12/70

(54) **COUNTERMEASURE DEVICE**
GEGENMASSNAHMENVORRICHTUNG
DISPOSITIF DE CONTRE-MESURE

(30) Priority: 10.12.2020 GB 202019446
(43) Date of publication of application: 18.10.2023
(73) Proprietor: BAE SYSTEMS plc, London SW1Y 5AD (GB)
(72) Inventor: SKORCZEWSKI, Leon, Preston Lancashire PR4 1AX (GB)
(74) Representative: BAE SYSTEMS plc Group IP Department
(86) International application number: PCT/GB2021/053144
(87) International publication number: WO 2022/123218

(56) References cited:
- EP-A1- 0 020 217
- US-A- 4 406 227
- US-A1- 2017 023 342
- US-A1- 2017 284 780

## Description

### FIELD

The present disclosure relates to a laser weapon countermeasure device and a launcher for the same. The present disclosure also relates to a vehicle comprising the launcher.

### BACKGROUND

Laser directed energy weapons are in development for use on vehicles, including air, land and sea-going vehicles, and in ground installations. These weapons use lenses and mirrors to collimate high-powered laser beams that burn through the skin of target vehicles. Once the skin of the target vehicle has been pierced, the laser beam may in turn injure people inside the target vehicle, rupture fuel tanks, or cause ordnance to explode. In some cases, the energy of the laser beam is intense enough to cause the target vehicle to explode on impact.

Chaff is a material used to deflect EM waves, with a wavelength of about between 0.75cm and 4cm, transmitted by a radar emitter. It comprises small conductive fibres, such as aluminium foil, strips or wire. The material is contained in canisters on a target vehicle. The canisters use a pyrotechnic charge that forces the chaff out of the canister and into the airflow to form a cloud in the path of the incoming EM waves. The chaff acts to reflect the EM waves such that the target vehicle is obfuscated from a radar receiver by the cloud.

Traditional chaff would not impede a laser beam such that those generated by laser weapons, with a wavelength of about between 100nm and 800nm, to an effective extent. Further, laser weapons do not rely on reflected signals to track and/or attack the target vehicle. Therefore, chaff, without modification, is not an effective countermeasure to a laser weapon.

Therefore, there is a need for an inexpensive and easy to manufacture countermeasure to laser weapons.

### SUMMARY

According to a first aspect of the present invention, there is provided a laser weapon countermeasure device according to claim 1.

Advantageously, the countermeasure device generates a cloud of reflective particulate metal that deflects, reflects or otherwise disrupts a laser beam.

Further, the resulting cloud of reflective particulate metal may cause damage to a laser emitter if it makes contact with the emitter's lens.

The particulate metal, metal or metal alloy may be highly heart conductive.

Not according to the invention, the filler may comprise a gas, and the sealed capsule may be pressurised. For example, the capsule is pressurised to a pressure greater than 1 atmosphere.

The particulate metal may comprise one of zinc, nickel, copper or silver particles. The particulate metal may comprise a metal powder. Alternatively, the particulate metal may comprise metal micrograins or filaments. The particulate metal may comprise metal-coated non-conductive particles.

The precursor is selected from a group that forms a reflective metal or reflective metal alloy when exposed to light. The capsule may be opaque to light. The precursor comprises one of triethyl aluminium, a pyrophoric organometallic molecule, or a metal hydride.

The laser weapon countermeasure device may comprise an explosive charge arranged to cause the capsule to burst at one of a predetermined altitude, time of flight, or distance travelled.

The laser weapon countermeasure device may comprise a deployable retardation device arranged to, in use, slow the descent of the countermeasure device.

An inside surface of the capsule may be at least partly coated in a reflective material.

The wall of the capsule may have a thickness of between about 10 and 30 micrometres. The wall of capsule is the skin or containment structure of the capsule, i.e. the main body.

The wall of the capsule may be formed of a dielectric insulator.

The capsule may have a length of about 50mm.

Not according to the present invention, the present disclosure provides a countermeasure launcher, the countermeasure launcher comprising a plurality of laser weapon countermeasure devices according to the first aspect and an ejection means.

The countermeasure launcher may comprise a chamber having at least one cartridge disposed therein, wherein the or each cartridge comprises a plurality of laser weapon countermeasure devices. Each cartridge may be independently ejectable from the chamber.

Not according to the present invention, there is provided a vehicle comprising the countermeasure launcher according to the second aspect. The vehicle may comprise an aircraft.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the disclosure will now be described by way of example only and with reference to the accompanying drawings, in which:
Figure 1 shows a countermeasure dispenser for use in disrupting an incoming laser beam;
Figure 2a shows a sectional view of a countermeasure;
Figure 2b shows a plan view of the countermeasure;
Figure 3 shows an example aircraft comprising the countermeasure launcher; and
Figures 4a and 4b demonstrate the countermeasure in use.

For convenience and economy, the same reference numerals are used in different figures to label identical or similar elements.

### DETAILED DESCRIPTION

Generally, embodiments herein relate to a countermeasure for deployment in response to a laser weapon threat. When deployed, the countermeasure provides the effect of dissipating (i.e. reducing spot intensity), or at least disrupting (i.e. deflecting, or changing the path), an incoming laser beam. In other words, the countermeasure prevents a laser beam from striking its intended target. Further, the countermeasure may cause damage to the laser beam emitter. These effects are achieved by dispersing a dense cloud of fine metal particles in the path of the laser beam.

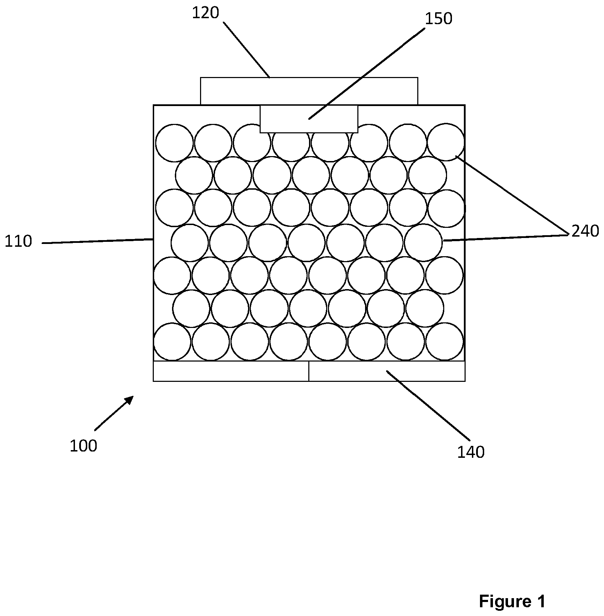

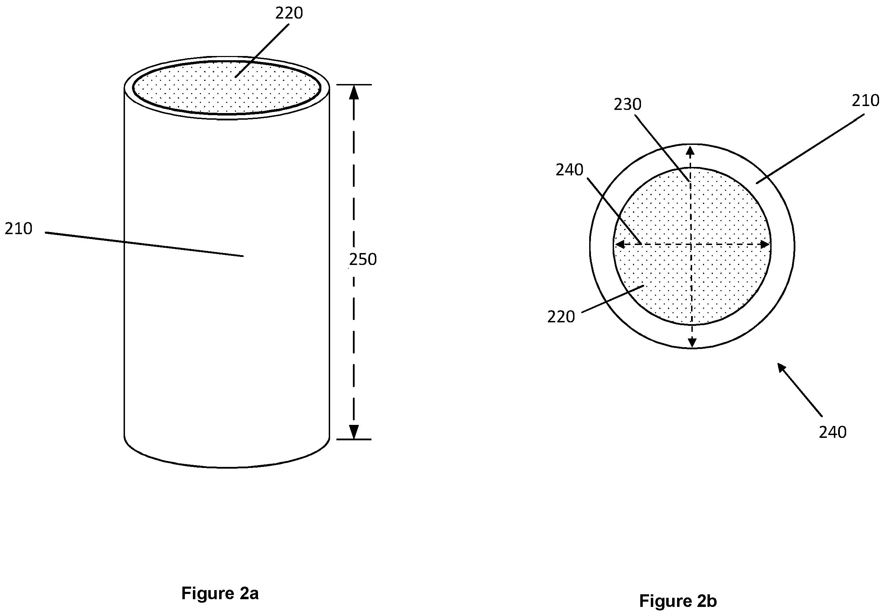

A countermeasure dispenser 100 will now be described with reference to Figure 1. The countermeasure dispenser 100 may be a chaff dispenser as found in the prior art. The dispenser 100 comprises a chamber 110 for receiving a plurality of countermeasure devices 240. The countermeasure devices 240 will be described in more detail with reference to Figures 2a and 2b. The dispenser 100 comprises attachment means 120 for attaching the dispenser 100 to a vehicle (for example, an aircraft).

The attachment means 120 may releasably couple the chamber 110 to the vehicle, or alternatively the chamber 110 may be integrated into the structure of the vehicle itself. Although the chamber 110 is shown as rectangular in Figure 1, it will be appreciated that other shaped configurations of the chamber 110 are possible, such as cylindrical. The chamber 110 may be arranged to hold significant numbers of countermeasure devices 240 (e.g. hundreds of thousands of individual countermeasure devices 240). Figure 1 is not intended to restrict the countermeasure devices 240 to being stored in a regular pattern as this is for illustration only, and furthermore Figure 1 is not intended to indicate scale or quantity.

A release means 140 is provided for dispensing the countermeasure devices 240 out of the chamber 110. The release means 140 may be an operable chamber opening (i.e. a door, or hatch). The release means 140 may comprise any suitable mechanical or electrically controlled release mechanism. The release means 140 may be manually activated, such as upon input from the pilot, or may be automatically activated, such as upon detection of radar signals or a laser beam impinging on the vehicle, the vehicle achieving a predetermined velocity or altitude, or upon determining a location of the vehicle to be within a particular region (e.g. an area above or around a known laser weapon).

The chamber 110 may further comprise an ejection means 150 for ejecting the countermeasure devices 240 out of the chamber 110, such as via mechanical or pyrotechnical methods. For example, methods may include dispersing the countermeasure devices 240 via an actuator, a burst charge, a gas propellant, or any other suitable dispersion means.

In an alternative embodiment, the chamber 110 is filled with a plurality of hollow cartridges, each having openings facing the opening of the chamber 110. Each of these cartridges comprises a plurality of countermeasure devices 240 as will be later described. Each cartridge is provided with an ejection means for forcing the countermeasure devices 240 out of the respective cartridge. Alternatively, one ejection means 150, as described above, may drive the countermeasure devices 240 from all of the cartridges at once. In further embodiments still, the cartridges may be driven from the chamber 110. Here, the cartridges are equipped with an explosive charge to detonate and release the countermeasure devices 240 a predetermined time after release, or at a predetermined distance from the vehicle.

Figures 2a and 2b show, respectively, a sectional and plan view of a countermeasure device 240. The countermeasure device 240 comprises a microcapsule 210. The microcapsule 240 is a hollow fibre material, sealed at both ends. In some embodiments, the microcapsules 210 are made from a lightweight non-conductive or insulating material, such as a dielectric insulator like a glass, ceramic or plastic. Using a non-conductive (e.g. electrically non-conductive) material tends to prevent the risk of electrostatic charge building up between countermeasure devices 240 and therefore reduces clumping, and tends to mitigate the risk of short-circuit when the countermeasure devices 240 are ejected. The outer surface of the microcapsule 210 may also be at least partly coated with an antistatic coating to aid in reducing clumping and therefore improve dispersion upon release from the chamber 110 (or cartridge).

In some embodiments, the inner surface of the microcapsule 210 is at least partly coated with a conductive substance. For example, all of the inner surface, or greater than about 50% (for example greater than about 60, 70, 80, 90, 95, 96, 97, 98 or 99%) of the inner surface, may be coated with the conductive substance.

The inner surface coating may be applied through any suitable method, such as through the electroless metal deposition method described in earlier patent publication WO 2010/097620. Preferably, the inner surface coating, i.e. the conductive substance, is electroplated. The conductive substance may comprise any suitable material capable of reflecting microwave energy. For example, the conductive material may be a metal, such as aluminium, silver, nickel, copper, zinc, gold, or iron, tin, chromium, indium, gallium, or a metal alloy thereof. Alternatively, the conductive substance may be a conducting non-metal, such as graphite or graphene. By coating the inner surface with a conductive material, the inner surface reflects incoming radar waves and therefore assists in the disruption of radar systems, as laser weapons may employ radars to provide targeting capability. However, by coating only the inner surfaces of otherwise non-conductive microcapsules 210, issues with high material weight and clumping tend to be avoided. Furthermore, as the outer surface is still non-conductive, issues with causing short circuits tend to be avoided. In other embodiments, for example where the countermeasure device 240 is not also intended to defeat radar targeting systems, the inner surface coating may not be provided.

The length 250 of the microcapsules 210 may be tuned to provide maximum radar interference. In this way, the countermeasure devices 240 may be suitable not only for the primary purpose of disrupting laser beams, but also for disrupting radar waves to prevent target lock by the attacking platform. For example, the microcapsules 210 may be cut to a length 250 corresponding to radio frequency (RF) wavelengths of interest. The microcapsules 210 may be cut to a length 250 corresponding to half of a radar signal's wavelength, thereby causing the conductive material of the microcapsule 210 to resonate when hit by a radar signal and re-reradiate the signal. The microcapsules 210 may also be cut to a length 250 corresponding to a multiple of the wavelength of interest. The chamber 110 may comprise microcapsules 210 tuned to multiple lengths in order to provide effective countermeasure against a radar system transmitting EM signals with a plurality of wavelengths. Alternatively, the chamber 110 may hold individual cartridges each containing a different of length of microcapsule 210. Examples include microcapsules 210 having lengths 250 of about 5-50mm, for example about 5mm, 7.5mm, 10mm, 15mm, 20mm, 25mm, 30mm, 35mm, 40mm, 45mm and/or 50mm, although other lengths may be utilised. For high frequency radar systems, the microcapsules 210 may have very short lengths of about 100-1000 microns e.g. about 100, 200, 300, 400, 500, 600, 700, 800, 900 and/or 1000 microns.

Preferably, where the countermeasure devices 240 are primarily intended to protect a target from laser beams, longer microcapsules 210 are preferred. For example, microcapsules 210 of about 50mm or more in length are preferred. This increases the chance that the microcapsule 210 will be struck by the laser beam and provides more internal volume for filler material.

The microcapsule 210 may have a nominal outer diameter 230 of less than about 150 microns, for example about 30-100 microns, about 40-90 microns, about 50-80 microns, preferably about 70 microns, although other nominal outer diameters are envisaged. The microcapsule 210 may have a nominal internal diameter 240 of less than about 60 microns, for example about 1-58 microns, 10-50 microns, about 15-40 microns, preferably about 25-30 microns, although other internal diameters are envisaged. The nominal internal diameter 240 may be greater than about 50% of the nominal outer diameter 230, for example greater than about 60, 70, 75, 80, 85, 90 or 95%.

The inner surface coating may have a thickness of at least about 100nm (for example at least about 200nm, 300nm, 400nm, 500nm, 1000nm, 2000nm, 5000nm). Alternatively, the inner surface coating may have a thickness of less than about 100nm, less than about 50nm, less than about 10nm, less than about 1nm, or less than about 0.5nm. Preferably, the inner surface coating has a thickness ranging from about 10nm to 5000nm. Preferably, the inner surface coating is intentionally applied in the production of the microcapsules 210. As such, it is preferable that the inner coating has a controlled thickness.

In other words, the total thickness of the wall of a microcapsule 210 is in the region of 10-30um, which is optimal for maintaining the integrity of the microcapsule 210 during storage and manufacture while allowing heat to be readily transferred through the wall to excite a filler 220 contained therein or melt the skin of the microcapsule 210.

While the microcapsule 210 is illustrated as being open-ended, this is for illustrative purposes only. The microcapsule 210 is filled with a filler 220 material. The filler 220 is sealed into the microcapsule 220 during manufacture of the microcapsule 210. For example, one end of the microcapsule 210 may be capped or crimped before the filler 220 is poured in and the other end may be capped or crimped after the filler 220 is poured in. The ends of the microcapsule 210 may be heat sealed, glued, or otherwise sealed to be air tight. In an alternative embodiment, the filler 220 is injected into a sealed microcapsule 210 and the injection hole plugged afterwards.

In one embodiment, the filler 220 comprises a light-sensitive metallic precursor, or a metallic precursor reactive with air. In other words, when exposed to air or light, the precursor forms a reflective metal or metal alloy, for example silver. The filler 220 may therefore be Triethyl aluminium, pyrophoric organometallic molecules, or a metal hydride (which decompose to leave metals). For example, the precursor used in the filler 220 may be silver halide, which is a chemical commonly used in photography development. Another example of an appropriate precursor is silver chloride. Where the precursor is light-sensitive, the microcapsule 210 skin may be formed of or coated in an opaque material.

In another embodiment, the filler 220 comprises an aqueous metal colloidal solution. In other words, the filler 220 comprises metal (or metallic) particles suspended in a liquid. The metal particles may comprise powder, micrograins or filaments. The metal particles may comprise metal-coated non-conductive particles, such as carbon nanotubes, glass, or polymers. For example, the filler 220 may comprise metal-coated glass microbeads. The liquid may be water, which is one example of a fluid that significantly expands when exposed to heat of more than 100 degrees Celsius.

Metals for use in the filler 220 include copper, nickel, silver or zinc, as these are highly heat conductive and reflective but not reactive with water. As the liquid in the filler 220 is heated (for example directly by an impinging laser beam or by the temperature of the ambient air that may have been heated by a laser beam), it expands to burst the microcapsule 210. Particularly, when the countermeasure device 240 is ejected into the path of a high energy laser beam, it is struck by the laser beam causing the liquid in the filler 220 to quickly boil, causing it to convert to gas and therefore expand. The relatively thin walls of the microcapsule 210 cannot contain the growing internal pressure, and so they break, dispersing the metal particles in the filler 220 and steam into the atmosphere through which the laser beam is passing. The originally suspended metal particles "bomb out" to form a cloud of metal particles.

A liquid constituent to the filler 220 is preferable over a gas, as it is more effective at dispersing the metal particles. However, it would be appreciated that the filler 220 may include a gas for causing the microcapsule 210 to burst when exposed to heat. The gas is selected such that it does not react with the metal particles also constituting the filler 220. The gas may be a noble gas, such as argon. Here, the microcapsule 210 is pressurised such that the expanding gas is more likely to cause it to rupture. The microcapsule 210 is pressurised such that its internal pressure exceeds the pressure of the air outside the microcapsule 210 (i.e. the local barometric pressure).

In some embodiments, the microcapsule 210 is provided with an explosive charge to cause the microcapsule 210 to burst once it has left the countermeasure dispenser 100. The explosive charge may be provided with a timed detonator such that the microcapsule 210 is caused to burst a predetermined distance from the ejection point. Alternatively, the explosive charge may be pressure sensitive, and therefore arranged to burst at a predetermined altitude. Instead of an explosive charge, a piercing or heating means may be provided. For example, the outside surface of the microcapsule may be coated in an exothermic substance which heats when exposed to air, thereby heating the filler 220 and/or damaging the wall of the microcapsule 210.

Alternatively again, the microcapsule 210 skin material may be chosen to naturally disintegrate over time or when travelling at a high velocity.

In some embodiments, the countermeasure device 240 is equipped with a retardation device such as a parachute or other surface for increasing the air resistance of the microcapsule 210. Therefore, when the countermeasure device 240 is deployed or otherwise launched, it tends to descend relatively slowly, or remain in a particular region of airspace. This effect may be naturally provided without a retardation device if the microcapsules 210 are of the preferred dimensions previously described.

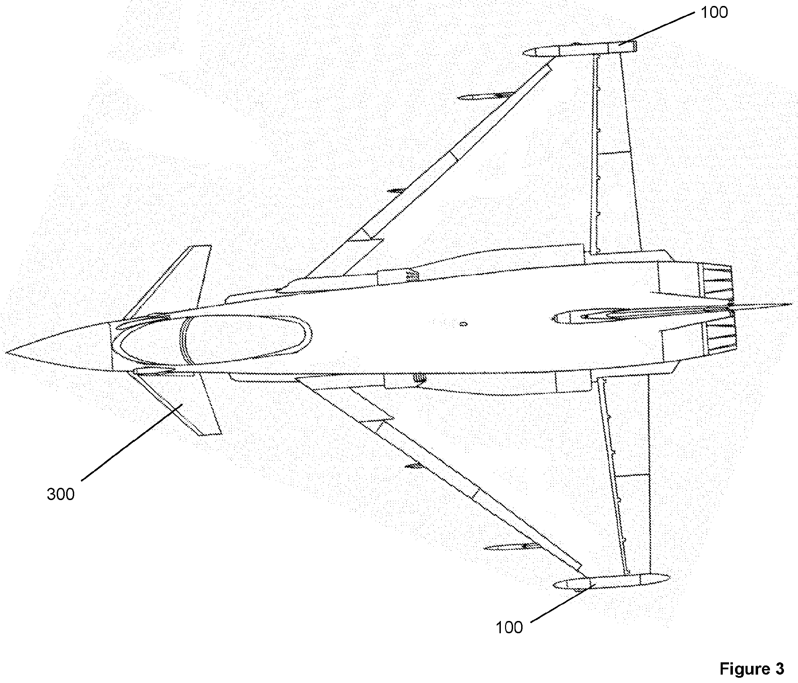

Figure 3 illustrates an example aircraft 300 comprising a plurality of countermeasure dispensers 100 as described above. The countermeasure dispensers 100 are located on the wingtips of the aircraft 300, however alternative locations are envisaged such as on the fuselage or tail of the aircraft 300. The countermeasure dispensers 100 may also be attached to payload pylons under the wings or fuselage of the aircraft 300. The aircraft 300 may comprise one or more countermeasure dispensers 100 containing the countermeasure devices 240.

While a fixed-wing aircraft 300 having the countermeasure dispensers 100 is illustrated, alternative embodiments provide other types of vehicles having one or more countermeasure dispensers 100. For example, the vehicle may comprise a surface ship, wheeled ground vehicle, tracked ground vehicle, spacefaring vessel, rotary-wing aircraft, or aerostat.

The countermeasure dispenser 100 may take the form of a cannon, mortar or missile launcher. In other words, the chamber 110 may be a gunbarrel and the previously described cartridge may be a shell packed with countermeasure devices 240. This tends to allow the countermeasure devices 240 to be launched to a greater range from the target being protected from incoming laser beams.

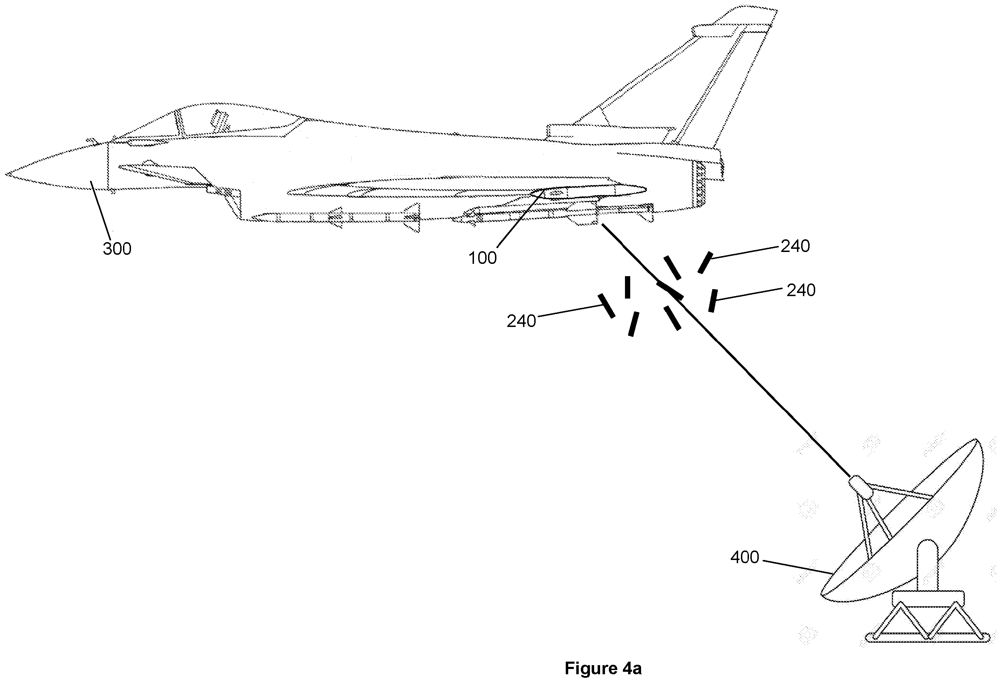

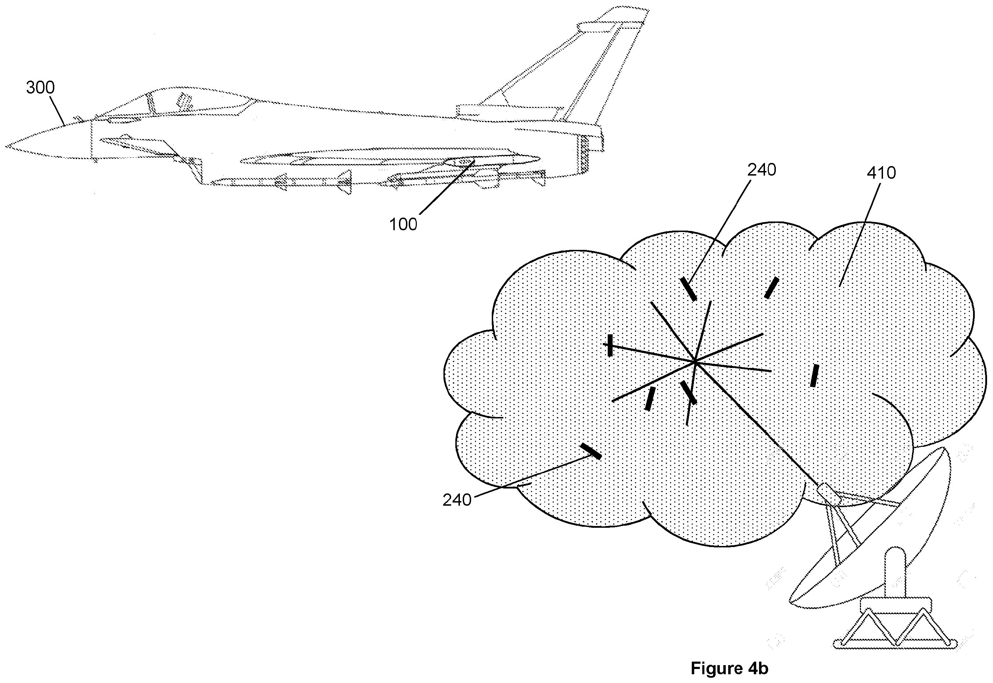

A method of disrupting laser beams directed towards a target (i.e. a method of protecting a target from incoming laser beams) will now be described with reference to Figure 4a and Figure 4b. Figure 4a illustrates an aircraft 300 having a countermeasure dispenser 100. As illustrated, a ground-based laser emitter 400 has targeted the aircraft 300 and fired a laser beam towards it. A sensor on-board the aircraft 300 detects the presence of the laser beam, and/or radar illumination. Alternatively, the pilot of the aircraft 300 may see the laser emitter 400 and decide to pre-emptively protect their aircraft 300. In response to the sensor detection or pilot command, the countermeasure dispenser 100 ejects a plurality of countermeasure devices 240 into the airflow. These are the countermeasure devices 240 described with reference to Figures 2a and 2b.

Alternatively, the countermeasure dispenser 100 may be configured to eject the countermeasure devices 240 when the aircraft 300 flies through an area in which a laser weapon is known to be, rather than in response to a laser weapon being fired at the aircraft 300. This threat location data may be based on intelligence information received from external assets (e.g. special forces or satellites) before or during the flight.

Figure 4b illustrates the effect of the laser beam striking or otherwise heating one of the ejected countermeasure devices 240 as it descends through the path of the laser beam or into the vicinity of the laser beam. The laser beam heats the skin of the microcapsule 210, causing the heat-reactive component of the filler 220 (e.g. the water in which metal particles are suspended) inside the microcapsule 210 to rapidly expand. The rapid expansion of the filler 220 causes the microcapsule to burst. The metal particles disperse in the air to form a dense cloud 410 (or aerosol) of metal particles. The cloud 410 has a particle density of between about **1,000 parts m⁻³ to about 50,000 m⁻³.** The metal particles are thermally conductive and reflective, and therefore disrupt the laser beam as it passes through the cloud 410. Further, the accelerating metal particles released from the burst microcapsule 210 may impact other microcapsules 210 in the area, causing tears in the skin of the other microcapsules 210 thereby causing them too to distribute their metal particles suspended in the filler 220.

As the cloud 410 of metal particles descends, metal particles may be deposited on the lens or other optical elements of the laser emitter 400, causing laser emitter 400 to be less effective through fouling (e.g. cracks, crazes, scratches or other contamination). In cases where the laser emitter 400 is aboard an airborne platform, the platform may fly through the cloud 410 as the platform follows the aircraft 300, again causing the metal particles to be deposited on the lens of the emitter 400 causing damage. In addition to fouling, the reflective particles deposited on the lens of the laser emitter 400 may cause an emitted laser beam to be immediately reflected back into the emitter 400, causing a self-destruct.

The countermeasure material described herein provides significant weight advantages over known countermeasure material/chaff. It is considered that the countermeasure material described herein (for example silicate glass fibre internally coated with aluminium) could be up to an order of magnitude lighter than its aluminium foil equivalent. For example, it is envisaged that 1kg of the countermeasure material described herein may provide the same/similar volume coverage (and thus the same/similar effectiveness in radar detection avoidance) as up to 10kg of conventional aluminium foil chaff. Further, the countermeasure material provides the dual purpose of defending a vehicle or area against both radar illumination and laser weaponry. The countermeasure material may damage the laser weaponry optics as a secondary effect.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

## Claims

1. A laser weapon countermeasure device (240), comprising:
a sealed capsule (210) having a filler (220) disposed therein, the filler comprising either:
a liquid and a reflective particulate metal, wherein the particulate metal is soluble in said liquid; or
a precursor for a reflective metal or reflective metal alloy, the precursor comprising one of triethyl aluminium, a pyrophoric organometallic molecule, or a metal hydride each of which form a reflective metal or reflective metal alloy when exposed to light,
wherein the capsule is configured to burst in air such that the filler disperses into an aerosol.

2. The laser weapon countermeasure device according to claim 1, wherein the particulate metal comprises one of zinc, nickel, copper or silver particles.

3. The laser weapon countermeasure device according to claim 1 or claim 2, wherein the particulate metal comprises a metal powder.

4. The laser weapon countermeasure device according to claim 1 or claim 2, wherein the particulate metal comprises metal-coated non-conductive particles.

5. The laser weapon countermeasure device according to claim 1, wherein the capsule is opaque to light.

6. The laser weapon countermeasure device according to any one of the preceding claims, comprising an explosive charge arranged to cause the capsule to burst at one of a predetermined altitude, time of flight, or distance travelled.

7. The laser weapon countermeasure device according to any one of the preceding claims, comprising a deployable retardation device arranged to, in use, slow the descent of the countermeasure device.

8. The laser weapon countermeasure device according to any one of the preceding claims, wherein an inside surface of the capsule is at least partly coated in a reflective material.

9. The laser weapon countermeasure device according to any one of the preceding claims, wherein the wall of the capsule has a thickness of between about 10 and 30 micrometres.

10. The laser weapon countermeasure device according to any one of the preceding claims, wherein the wall of the capsule is formed of a dielectric insulator.

11. The laser weapon countermeasure device according to any one of the preceding claims, wherein the capsule has a length of about 50mm.

## Patentansprüche

1. Laserwaffen-Gegenmaßnahmenvorrichtung (240), umfassend:
eine versiegelte Kapsel (210), die einen darin angeordneten Füllstoff (220) aufweist, der Füllstoff umfassend entweder:
eine Flüssigkeit und ein reflektierendes partikelförmiges Metall, wobei das partikelförmige Metall in der Flüssigkeit löslich ist; oder
einen Vorläufer für ein reflektierendes Metall oder eine reflektierende Metalllegierung, der Vorläufer umfassend eines von Triethylaluminium, einem pyrophoren organometallischen Molekül oder einem Metallhydrid, die jeweils ein reflektierendes Metall oder eine reflektierende Metalllegierung ausbilden, wenn sie Licht ausgesetzt sind,
wobei die Kapsel konfiguriert ist, um in der Luft derart zu platzen, dass der Füllstoff in ein Aerosol dispergiert.

2. Laserwaffen-Gegenmaßnahmenvorrichtung nach Anspruch 1, wobei das partikelförmige Metall eines von Zink-, Nickel-, Kupfer- oder Silberpartikeln umfasst.

3. Laserwaffen-Gegenmaßnahmenvorrichtung nach Anspruch 1 oder 2, wobei das partikelförmige Metall ein Metallpulver umfasst.

4. Laserwaffen-Gegenmaßnahmenvorrichtung nach Anspruch 1 oder 2, wobei das partikelförmige Metall metallbeschichtete nichtleitfähige Partikel umfasst.

5. Laserwaffen-Gegenmaßnahmenvorrichtung nach Anspruch 1, wobei die Kapsel lichtundurchlässig ist.

6. Laserwaffen-Gegenmaßnahmenvorrichtung nach einem der vorstehenden Ansprüche, umfassend eine Sprengladung, die eingerichtet ist, um zu bewirken, dass die Kapsel bei einem von einer vorbestimmten Höhe, Flugzeit oder zurückgelegten Entfernung platzt.

7. Laserwaffen-Gegenmaßnahmenvorrichtung nach einem der vorstehenden Ansprüche, umfassend eine entfaltbare Verzögerungsvorrichtung, die eingerichtet ist, um, in Verwendung, das Absinken der Gegenmaßnahmenvorrichtung zu verlangsamen.

8. Laserwaffen-Gegenmaßnahmenvorrichtung nach einem der vorstehenden Ansprüche, wobei eine innere Oberfläche der Kapsel mindestens teilweise mit einem reflektierenden Material beschichtet ist.

9. Laserwaffen-Gegenmaßnahmenvorrichtung nach einem der vorstehenden Ansprüche, wobei die Wand der Kapsel eine Dicke von zwischen etwa 10 und 30 Mikrometern aufweist.

10. Laserwaffen-Gegenmaßnahmenvorrichtung nach einem der vorstehenden Ansprüche, wobei die Wand der Kapsel aus einem dielektrischen Isolator ausgebildet ist.

11. Laserwaffen-Gegenmaßnahmenvorrichtung nach einem der vorstehenden Ansprüche, wobei die Kapsel eine Länge von etwa 50 mm aufweist.

## Revendications

1. Dispositif de contre-mesure d'arme laser (240), comprenant :
une capsule (210) scellée ayant une charge (220) disposée à l'intérieur de celle-ci, la charge comprenant soit :
un liquide et un métal particulaire réfléchissant, dans lequel le métal particulaire est soluble dans ledit liquide ; ou
un précurseur pour un métal réfléchissant ou un alliage métallique réfléchissant, le précurseur comprenant l'un parmi du triéthylaluminium, une molécule organométallique pyrophorique, ou un hydrure métallique, dont chacun(e) forme un métal réfléchissant ou un alliage métallique réfléchissant lorsqu'il(elle) est exposé(e) à la lumière,
dans lequel la capsule est conçue pour éclater dans de l'air de telle sorte que la charge se disperse en un aérosol.

2. Dispositif de contre-mesure d'arme laser selon la revendication 1, dans lequel le métal particulaire comprend l'une parmi des particules de zinc, de nickel, de cuivre ou d'argent.

3. Dispositif de contre-mesure d'arme laser selon la revendication 1 ou la revendication
2, dans lequel le métal particulaire comprend une poudre métallique.

4. Dispositif de contre-mesure d'arme laser selon la revendication 1 ou la revendication
2, dans lequel le métal particulaire comprend des particules non conductrices revêtues de métal.

5. Dispositif de contre-mesure d'arme laser selon la revendication 1, dans lequel la capsule est opaque à la lumière.

6. Dispositif de contre-mesure d'arme laser selon l'une quelconque des revendications précédentes, comprenant une charge explosive disposée pour amener la capsule à éclater à l'une parmi une altitude, une durée de trajet ou une distance parcourue prédéterminées.

7. Dispositif de contre-mesure d'arme laser selon l'une quelconque des revendications précédentes, comprenant un dispositif de ralentissement disposé pour,
en cours d'utilisation, ralentir la descente du dispositif de contre-mesure.

8. Dispositif de contre-mesure d'arme laser selon l'une quelconque des revendications précédentes, dans lequel une surface interne de la capsule est au moins partiellement revêtue d'un matériau réfléchissant.

9. Dispositif de contre-mesure d'arme laser selon l'une quelconque des revendications précédentes, dans lequel la paroi de la capsule a une épaisseur comprise entre environ 10 et 30 micromètres.

10. Dispositif de contre-mesure d'arme laser selon l'une quelconque des revendications précédentes, dans lequel la paroi de la capsule est formée d'un isolant diélectrique.

11. Dispositif de contre-mesure d'arme laser selon l'une quelconque des revendications précédentes, dans lequel la capsule a une longueur d'environ 50 mm.
